# EUROPEAN PATENT APPLICATION

(11) **EP 2 846 517 A1**
(43) Date of publication of application: **11.03.2015**
(21) Application number: 14173118.2
(22) Date of filing: 19.06.2014
(51) Int. Cl.: H04M 1/23, H04M 1/02, G06F 1/16

(54) **Hand held display device**

(30) Priority: 09.09.2013 GB 201316017
(71) Applicant: Thales Holdings UK Plc, Addlestone, Surrey KT15 2NX (GB)
(72) Inventor: Barringer, Julian, Nr Weybridge, Surrey KT15 2NX (GB); Holmes, Andrew, Addlestone, Surrey KT15 2NX (GB)
(74) Representative: Round, Edward Mark

(57) **Abstract**

A hand-held display device 1 comprising a touch screen 3 operable to display information and to update the display in response to a user touching the screen, a keypad 7 comprising at least one key 13 through which the user can issue commands to the device and in response to which commands the device will update the display on the touch screen, the keypad being movable from a first position in which it overlies a portion of the touch screen to a second position in which the portion of the touch screen is exposed to the user, wherein, when the keypad is in the first position, the at least one key is exposed so as to allow the user to access the key and to issue commands to the device using the key.

## Description

### FIELD

Embodiments described herein relate generally to a hand held display device.

### BACKGROUND

In military scenarios, hand-held devices having computing and display capabilities can enhance the operational effectiveness of troops, by providing enhanced situational awareness, for example. Similar devices can also provide utility in other fields, such as oil and gas exploration, and mining etc. Given the types of environment in which personnel in these fields must operate, it is often the case that gloves will need to be worn when operating such devices.

Conventionally, hand-held devices suitable for such applications have been produced by repackaging, in a rugged casing, display units used in commercially available cellular phones and tablet devices. Although this works well for commercial devices that are keypad driven, the recent dominance of touchscreen smartphones causes problems because the capacitive types of touchscreen used in those devices are difficult to operating when wearing gloves.

One solution that has been proposed is for personnel to carry two display units: a small keypad driven display unit for tactical use, which may be operated when wearing gloves, and a larger touchscreen display unit for use where gloves are not required, such as during planning stages of an operation. However, this is not ideal, since the use of two separate devices will result in an overall increase in energy consumption, as well as adding to the weight that the person must carry.

In another approach, special gloves have been developed having conductive tips that are able to operate capacitive touchscreens. A problem with this approach is that many different types of glove may be required (combat, cold weather contact, NBC etc) and each different type of glove requires its own special adaptation. Moreover, the "gestures" used for interacting with modern touchscreen user interfaces are awkward when wearing restrictive gloves.

A further option that has been proposed is to use a resistive touchscreen, rather than a capacitive touchscreen. However, resistive touchscreens are much more "heavy-handed" and their limited number of touch points (often single-touch rather than multi-touch) means they do not work well with operating systems designed for capacitive touchscreens. Resistive touchscreens can appear awkward and clumsy, as failing to respond well to the light touch employed in typical gestures such as "swipe", "pinch", etc., that people are used to relying on for operating commercially available touchscreen smartphones.

It is desirable to provide a hand-held display device that can solve some of these problems.

### BRIEF DESCRIPTION OF FIGURES

Embodiments of the invention will now be described by way of example with reference to the accompanying drawings in which:
Figure 1 shows a perspective view of a hand-held display device according to an embodiment;
Figure 2 shows a side view of the device shown in Figure 1, with the keypad being pivoted away from the touchscreen of the device;
Figure 3A shows a front view of the device of Figure 1 when the keypad is overlaid on the touchscreen;
Figure 3B shows a rear view of the device of Figure 1 when the keypad is overlaid on the touchscreen;
Figure 3C shows a front view of the device of Figure 1, when the keypad is in a stowed position behind the touchscreen;
Figure 3D shows a rear view of the device of Figure 1, when the keypad is in a stowed position behind the touchscreen;
Figure 4A shows a perspective view of the device of Figure 1 as seen from above, when the keypad is in a stowed position behind the touchscreen; and
Figure 4B shows a perspective view of the device of Figure 1 as seen from below, when the keypad is in a stowed position behind the touchscreen;

### DETAILED DESCRIPTION

According to a first embodiment, there is provided a hand-held display device, comprising:
a touch screen operable to display information and to update the display in response to a user touching the screen;
a keypad comprising at least one key through which the user can issue commands to the device and in response to which commands the device will update the display on the touch screen;
the keypad being movable from a first position in which it overlies a portion of the touch screen to a second position in which the portion of the touch screen is exposed to the user;
wherein, when the keypad is in the first position, the at least one key is exposed so as to allow the user to access the key and to issue commands to the device using the key.

In some embodiments, the entire touch screen is exposed to the user when the keypad is in the second position.

In some embodiments, the keypad is movable between the first and second positions by pivoting about a point on the device.

In some embodiments, the device comprises locking means for holding the keypad in the first and / or second position.

In some embodiments, the device comprises means for determining the position of keypad with respect to the housing.

In some embodiments, when the keypad is in the second position, the keypad is stowed behind the touch screen.

In some embodiments, when the keypad is in the first position, a second portion of the touch screen is exposed to the user and is unobscured by the keypad.

In some embodiments, the device is configured such that when the keypad is in the first position, the device will only display information on the second portion of the touchscreen.

In some embodiments, the touch screen is a capacitive touchscreen.

In some embodiments, the keypad is configured to issue commands to the device using a short range radio communication standard. The standard may be a Bluetooth standard. In some embodiments, the keypad is configured to issue commands to the device using Near Field Communication.

In some embodiments, the keypad is electrically isolated from the rest of the device.

In some embodiments, the keypad includes a battery.

In some embodiments, the device includes a transmitter and receiver for communicating with other devices over a wireless communications network.

In some embodiments, the device comprises a rugged exterior. The rugged exterior may comprise a rubber material.

Embodiments described herein permit the use of standard touchscreen displays such as those found in commercially available smartphones in a rugged display unit suitable for use in different environments, including on the battlefield.

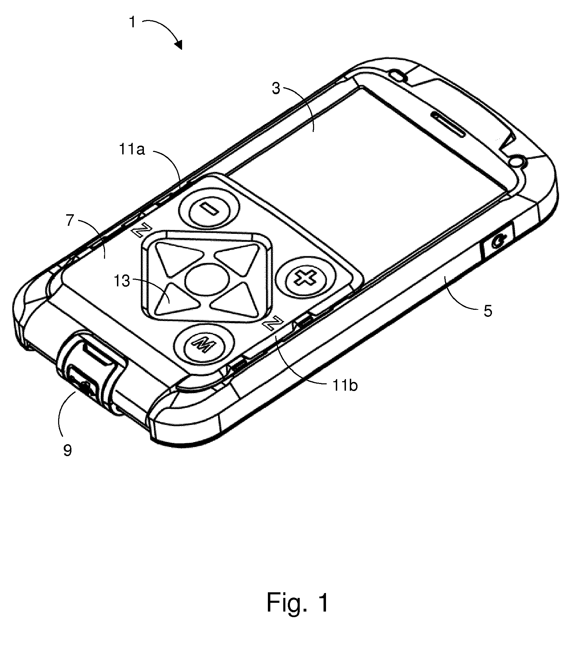

Figure 1 shows a perspective view of a hand-held display device according to an embodiment. At the front of the device is a touchscreen 3 that can be used to display images and data to the user. The touch screen 3 allows the user to interact directly with the device and to issue commands by touching the screen at particular points. For example, the touchscreen may display a map of the user's environment and the user may issue a command to magnify a region of that map by pressing or tapping that region of the screen.

In some embodiments, the device may include electronic components (transmitter, receiver, etc.) for allowing the device to communicate with other devices across a wireless network, for example. In such embodiments, in addition to updating the display itself, the user may use the touchscreen to issue communication commands to the device. For example, the screen may display an option for initiating a connection across the wireless network, in order that the user may then use the device to upload or download information to / from a remote location.

The electronic components, together with the touchscreen, are contained in a housing 5 having a rugged exterior that provides protection from the outside environment. Typically, the exterior will comprise a form of rubber, although other protective materials with similar insulating material can also be envisaged.

As shown in Figure 1, the device also includes a keypad 7 that, like the touchscreen, can be used to issue commands to the device. The keypad 7 is pivotably connected to the housing 5 at one end 9, such that it can rotated about the base of the housing. The keypad is arranged so that as it rotates towards the touchscreen, it will come to rest in a position in which it overlays part of the touchscreen 3. Figure 1 shows the device with the keypad in this particular configuration; referring to that figure, the reader will understand that the touchscreen extends beneath the keypad.

Located at the side of the keypad are locking means 11 a, 11 b which in the present embodiment take the form of one or more clips that engage with complementary portions on the housing. The locking means 11 a, 11 b allow the keypad to remain fixed in position when overlaid on the touchscreen. The skilled person will understand that a range of different locking members may be used to allow the keypad to reversibly engage with the housing; for example, the clips may be supplemented with, or replaced by, magnetic elements for keeping the keypad held in position when it is overlaid on the screen.

The keypad comprises one or more keys or buttons 13, which can be pressed in order to issue commands to the device. As shown in Figure 1, the buttons 13 are positioned such that when the keypad is overlaid on the touchscreen, the buttons face towards the user and away from the screen. The keypad 7 allows the user to interact with the device without touching the screen. In this way, the keypad can allow the user to more easily select options and issue commands when wearing gloves, for example. In some embodiments, the keypad may be detachable from the housing and may be exchanged for other keypads having more or fewer keys in different arrangements.

The reader will understand that the keypad is an electrically separate component of the display device. When the user presses the key(s) on the keypad, the keypad issues commands to the device through use of a short range communications standard. In one embodiment, the keypad may include its own internal battery, such as a single embedded lithium coil battery, for example. The keypad may issue commands to the device through use of a Bluetooth standard. The use of Bluetooth Smart (formerly known as Bluetooth 4 or Bluetooth Low Energy) or a similar standard places a low energy burden on the device, meaning that the keypad can continue to communicate with the device over a long period without the need to recharge the battery. In another embodiment, the keypad may rely on Near Field Communication NFC to issue commands to the device, obviating the need for a battery in the keypad. Both of these approaches are viable following the integration of NFC or Bluetooth Smart into commercially available smartphones.

By using a short range communications standard to issue commands to the device, the keypad can be kept completely electrically isolated from the main display unit, without the need for any connecting cables. Moreover, the keypad can be kept completely sealed, making it resilient to harsh environments. Since the touchscreen plays no role during keypad operation, there is no need to seal the touchscreen under the keypad. A wet or dirty screen will also have no effect on the keypad's operation.

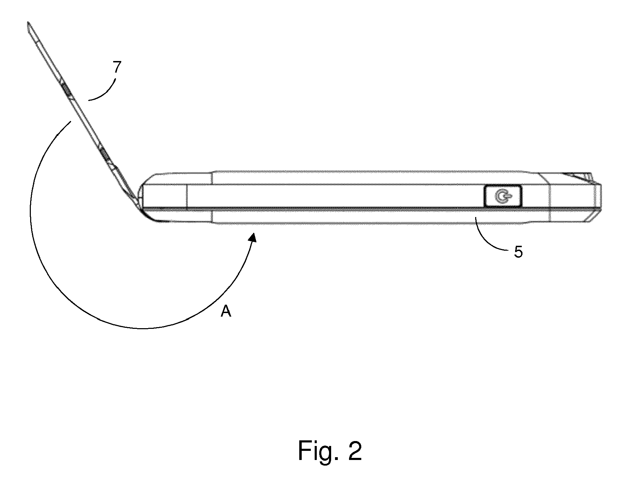

The rotating motion of the keypad can be understood with reference to Figure 2, which shows a side view of the device with the keypad 7 being pivoted away from the touchscreen. Here, the arrow "A" shows the path of the keypad as it pivots about the base of the housing 5. As the keypad pivots about the base of the housing, the portion of the touchscreen that was previously obscured by the keypad becomes exposed, allowing the user access to the full dimensions of the touchscreen.

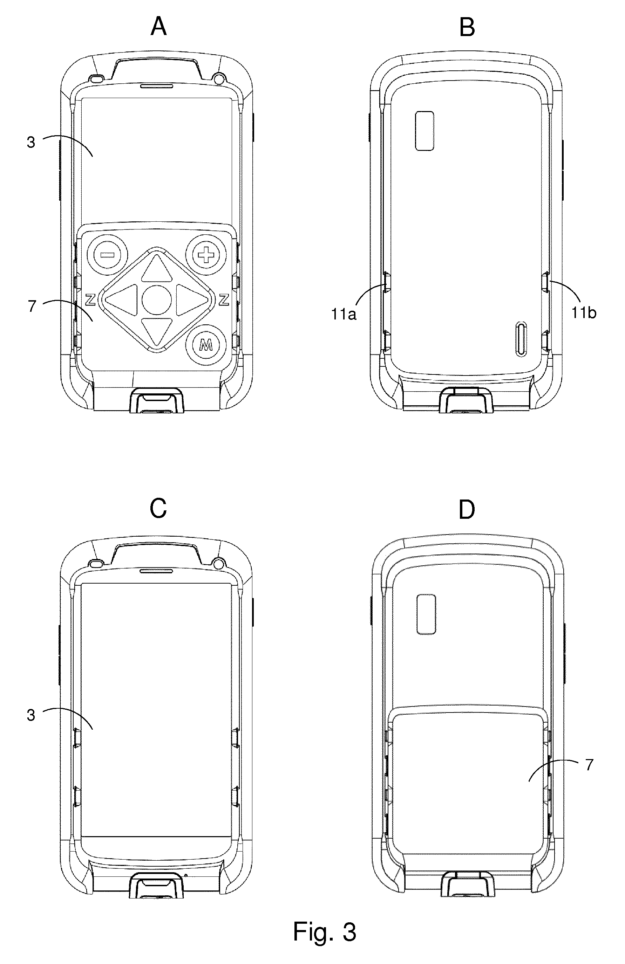

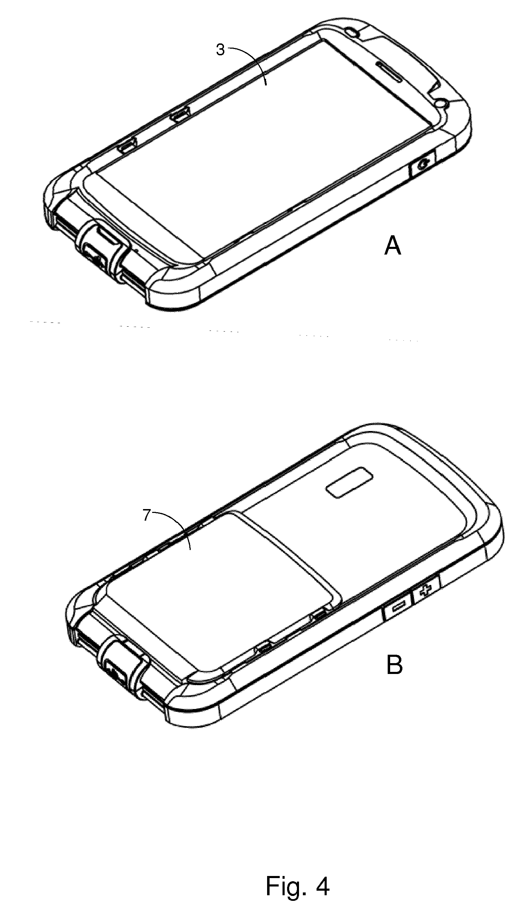

In the present embodiment, the keypad can be rotated from the position in which it overlays the touchscreen to a second position in which it is stowed behind the touchscreen. Figures 3A and 3B show the front and rear of the device, respectively, when the keypad is in its first position overlaying the touchscreen. Figures 3C and 3D show the front and rear of the device, respectively, when the keypad is rotated to the stowed position. Figures 4A and 4B also show the device in perspective, when the keypad is in this stowed position. With the keypad held in the stowed position, the device occupies the same volume of space, but the full extent of the touchscreen 3 is now available for use. The keypad can be held in the stowed position through use of locking means similar to those used to hold the keypad in position when overlaid on the touch screen.

The device may determine the keypad's position relative to the housing using a number of different means. For example, the device may incorporate a relay or proximity sensor to sense the distance between the keypad and the touchscreen. In some embodiments, a hall-effect switch may be used. When it is determined that the keypad is in an active configuration (i.e. overlaid on the touchscreen), the display unit will enter a mode in which it is receptive to commands received from the keypad. In some embodiments, the display unit will automatically limit the display area to the portion of the screen that is not obscured by the keypad. When doing so, the device may adjust the display such that only the most important functions are presented to the user on the screen.

Thus, embodiments as described herein provide a display unit that can operate as a standard touchscreen device without compromise, but which can still be used, whilst wearing gloves, by deploying a keypad over part of the screen. When deploying the keypad over part of the screen, the overall size of the display unit is not increased beyond that of the underlying touchscreen device.

Through use of the touchscreen, the display unit can provide high levels of functionality that are expected of a modern device. At the same time, by deploying the keypad, the display unit becomes a dedicated display for use in e.g. high stress / tactical environments.

While certain embodiments have been described, these embodiments have been presented by way of example only, and are not intended to limit the scope of the invention. For example, although the keypad has thus far been illustrated as rotating about the base of the device, it is possible that the keypad could be arranged to rotate about any side of the device. Indeed, the novel methods, devices and systems described herein may be embodied in a variety of forms; furthermore, various omissions, substitutions and changes in the form of the methods and systems described herein may be made without departing from the scope of the invention. The accompanying claims and their equivalents are intended to cover such forms or modifications as would fall within the scope of the invention.

## Claims

1. A hand-held display device, comprising:
a touch screen operable to display information and to update the display in response to a user touching the screen;
a keypad comprising at least one key through which the user can issue commands to the device and in response to which commands the device will update the display on the touch screen;
the keypad being movable from a first position in which it overlies a portion of the touch screen to a second position in which the portion of the touch screen is exposed to the user;
wherein, when the keypad is in the first position, the at least one key is exposed so as to allow the user to access the key and to issue commands to the device using the key.

2. A hand-held display device according to claim 1, wherein the entire touch screen is exposed to the user when the keypad is in the second position.

3. A hand-held device according to claim 1 or 2, wherein the keypad is movable between the first and second positions by pivoting about a point on the device.

4. A hand-held device according to any one of the previous claims, comprising locking means for holding the keypad in the first and / or second position.

5. A hand-held device according to any one of the preceding claims, comprising means for determining the position of keypad with respect to the housing.

6. A hand-held device according to any one of the preceding claims, wherein, when in the second position, the keypad is stowed behind the touch screen.

7. A hand-held device according to any one of the preceding claims, wherein when the keypad is in the first position, a second portion of the touch screen is exposed to the user and is unobscured by the keypad.

8. A hand-held device according to claim 7, wherein the device is configured such that when the keypad is in the first position, the device will only display information on the second portion of the touchscreen.

9. A hand-held device according to any one of the preceding claims, wherein the touch screen is a capacitive touchscreen.

10. A hand-held device according to any one of the preceding claims, wherein the keypad is configured to issue commands to the device using a short range radio communication standard.

11. A hand-held device according to claim 10, wherein the standard is a Bluetooth standard.

12. A hand-held device according to claim 10, wherein the keypad is configured to issue commands to the device using Near Field Communication.

13. A hand-held device according to any one of the preceding claims wherein the keypad is electrically isolated from the rest of the device; and / or wherein the keypad includes a battery.

14. A hand-held device according to any one of the preceding claims, wherein the device includes a transmitter and receiver for communicating with other devices over a wireless communications network.

15. A hand-held device according to any one of the preceding claims, wherein the device comprises a rugged exterior and optionally wherein the rugged exterior comprises a rubber material.
